(19) Europäisches Patentamt / European Patent Office / Office européen des brevets

(11) **EP 4 178 096 A1**

(12) **EUROPEAN PATENT APPLICATION**

(43) Date of publication:
**10.05.2023 Bulletin 2023/19**

(51) International Patent Classification (IPC):
**H02M 1/32** $^{(2007.01)}$ **H02P 29/68** $^{(2016.01)}$

(21) Application number: **22205467.8**

(52) Cooperative Patent Classification (CPC):
**H02M 1/327; H02P 29/68**

(22) Date of filing: **04.11.2022**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.11.2021 CN 202111305251**

(71) Applicant: **Nio Technology (Anhui) Co., Ltd Hefei City, Anhui 230601 (CN)**

(72) Inventors:
• **WANG, KAI**
**Hefei City, Anhui, 230601 (CN)**
• **XIA, Zhongyi**
**Hefei City, Anhui, 230601 (CN)**
• **SU, Xiezu**
**Hefei City, Anhui, 230601 (CN)**
• **SUN, Yongchao**
**Hefei City, Anhui, 230601 (CN)**

(74) Representative: **Vossius & Partner Patentanwälte Rechtsanwälte mbB Siebertstraße 3 81675 München (DE)**

(54) **JUNCTION TEMPERATURE CALCULATION METHOD AND DEVICE FOR POWER CONVERSION MODULE, MEDIUM, AND VEHICLE**

(57) The disclosure relates to a junction temperature calculation method for a power conversion module. The power conversion module includes a first switching device. The junction temperature calculation method includes: correcting a conduction loss of the first switching device, where the correction of the conduction loss is based on at least a first correction coefficient $K_1$, and the first correction coefficient $K_1$ is associated with a modulation ratio of the power conversion module; and calculating a junction temperature of the first switching device as a junction temperature of the power conversion module, where the calculation of the junction temperature of the first switching device is based on at least the corrected conduction loss. The disclosure also relates to a junction temperature calculation device for a power conversion module, a computer-readable storage medium, and a vehicle. In the junction temperature calculation solution proposed by the disclosure, the conduction loss and a switching loss of the switching device are corrected based on the correction coefficient according to factors such as the modulation ratio and an alternatingcurrent frequency, thereby improving the calculation precision of the junction temperature of the power conversion module.

2000

```
Correct a conduction loss of a first switching device          S210

Correct a switching loss of the first switching device          S220

Calculate a junction temperature of the first switching device
as a junction temperature of the power conversion module        S230
```

*FIG. 2*

EP 4 178 096 A1

## Description

### Technical Field

The disclosure relates to the field of power conversion, and specifically, to a junction temperature calculation method and a junction temperature calculation device for a power conversion module, a computer-readable storage medium, and a vehicle.

### Background Art

Power and electronic devices generate heat during operation. If the heat exceeds a limit, the devices may not work properly or even may be damaged. To better monitor and control temperatures of the devices, it is necessary to calculate junction temperatures of switching devices and power conversion modules of the devices.

There are two junction temperature calculation methods in the prior art: a hardware method and a software method. In the hardware method, an additional hardware apparatus needs to be added, which brings challenges to the size, cost, and hardware layout of a power and electronic device. In addition, the calculation precision of the hardware method is easily affected by detection precision and anti-interference ability of the hardware apparatus and the like. In the software method, hardware of a power and electronic device does not need to be changed, and the universality and real-time performance is better. The disclosure proposes an improved junction temperature calculation solution based on the existing software method.

### Summary of the Disclosure

According to one aspect of the disclosure, a junction temperature calculation method for a power conversion module is provided. The power conversion module includes a first switching device. The junction temperature calculation method includes: correcting a conduction loss of the first switching device, where the correction of the conduction loss is based on at least a first correction coefficient $K_1$, and the first correction coefficient $K_1$ is associated with a modulation ratio of the power conversion module; and calculating a junction temperature of the first switching device as a junction temperature of the power conversion module, where the calculation of the junction temperature of the first switching device is based on at least the corrected conduction loss.

As an alternative or supplement to the above solution, in the junction temperature calculation method according to an embodiment of the disclosure, in a case that the modulation ratio exceeds 1, the first correction coefficient $K_1$ is less than 1; otherwise, the first correction coefficient $K_1$ is 1.

As an alternative or supplement to the above solution, in the junction temperature calculation method according to an embodiment of the disclosure, the correction of the conduction loss is further based on at least a second correction coefficient $K_2$, and the second correction coefficient $K_2$ is associated with an alternating-current frequency of the power conversion module.

As an alternative or supplement to the above solution, in the junction temperature calculation method according to an embodiment of the disclosure, in a case that the alternating-current frequency is less than a first frequency threshold, the second correction coefficient $K_2$ is greater than 1; otherwise, the second correction coefficient $K_2$ is 1;

As an alternative or supplement to the above solution, the junction temperature calculation method according to an embodiment of the disclosure further includes: correcting a switching loss of the first switching device. The correction of the switching loss is based on at least a third correction coefficient $K_3$, and the third correction coefficient $K_3$ is associated with the alternating-current frequency of the power conversion module. The calculation of the junction temperature of the first switching device is further based on at least the corrected switching loss.

As an alternative or supplement to the above solution, in the junction temperature calculation method according to an embodiment of the disclosure, in a case that the alternating-current frequency is less than a second frequency threshold, the third correction coefficient $K_3$ is greater than 1; otherwise, the third correction coefficient $K_3$ is 1.

As an alternative or supplement to the above solution, in the junction temperature calculation method according to an embodiment of the disclosure, the power conversion module further includes a second switching device. The junction temperature calculation method further includes: calculating a junction temperature of the second switching device; and selecting the higher junction temperature from the junction temperature of the first switching device and the junction temperature of the second switching device as the junction temperature of the power conversion module.

As an alternative or supplement to the above solution, in the junction temperature calculation method according to an embodiment of the disclosure, at least one of the following coefficients is experimentally corrected: the first correction coefficient $K_1$, the second correction coefficient $K_2$, and the third correction coefficient $K_3$.

According to another aspect of the disclosure, a junction temperature calculation device for a power conversion module is provided. The power conversion module includes a first switching device. The junction temperature calculation device includes: a first correction apparatus configured to correct a conduction loss of the first switching device, where the correction of the conduction loss is based on at least a first correction coefficient $K_1$, and the first correction coefficient $K_1$ is associated with a modulation ratio of the power conversion module; and a first calculation apparatus configured to calculate a junction temperature of the first switching device as a junction temperature of the power conversion module, wherein the calculation of the junction temperature of the first switching device is based on at least the corrected conduction loss.

As an alternative or supplement to the above solution, in the junction temperature calculation device according to an embodiment of the disclosure, in a case that the modulation ratio exceeds 1, the first correction coefficient $K_1$ is less than 1; otherwise, the first correction coefficient $K_1$ is 1.

As an alternative or supplement to the above solution, in the junction temperature calculation device according to an embodiment of the disclosure, the correction of the conduction loss in the first correction apparatus is further based on at least a second correction coefficient $K_2$, and the second correction coefficient $K_2$ is associated with an alternating-current frequency of the power conversion module.

As an alternative or supplement to the above solution, in the junction temperature calculation device according to an embodiment of the disclosure, in a case that the alternating-current frequency is less than a first frequency threshold, the second correction coefficient $K_2$ is greater than 1; otherwise, the second correction coefficient $K_2$ is 1.

As an alternative or supplement to the above solution, the junction temperature calculation device according to an embodiment of the disclosure further includes: a second correction apparatus configured to correct a switching loss of the first switching device. The correction of the switching loss is based on at least a third correction coefficient $K_3$, and the third correction coefficient $K_3$ is associated with the alternating-current frequency of the power conversion module. The calculation of the junction temperature of the first switching device in the first calculation apparatus is further based on at least the corrected switching loss.

As an alternative or supplement to the above solution, in the junction temperature calculation device according to an embodiment of the disclosure, in a case that the alternating-current frequency is less than a second frequency threshold, the third correction coefficient $K_3$ is greater than 1; otherwise, the third correction coefficient $K_3$ is 1.

As an alternative or supplement to the above solution, in the junction temperature calculation device according to an embodiment of the disclosure, the power conversion module further includes a second switching device. The junction temperature calculation device further includes: a second calculation apparatus configured to calculate a junction temperature of the second switching device; and a selection apparatus configured to select the higher junction temperature from the junction temperature of the first switching device that is calculated by the first calculation apparatus and the junction temperature of the second switching device that is calculated by the second calculation apparatus as the junction temperature of the power conversion module.

As an alternative or supplement to the above solution, in the junction temperature calculation device according to an embodiment of the disclosure, at least one of the following coefficients is experimentally corrected: the first correction coefficient $K_1$, the second correction coefficient $K_2$, and the third correction coefficient $K_3$.

According to another aspect of the disclosure, a junction temperature calculation device is provided, including a memory, a processor, and a computer program stored on the memory and executable on the processor. When the computer program is executed by the processor, the junction temperature calculation method described above is implemented.

According to still another aspect of the disclosure, a vehicle is provided, including the junction temperature calculation device described above.

According to still another aspect of the disclosure, a computer-readable storage medium having a computer program stored thereon is provided. When the computer program is executed by a processor, the junction temperature calculation method described above is implemented.

According to the junction temperature calculation solution of one aspect of the disclosure, the conduction loss of the switching device is corrected based on the first correction coefficient according to the modulation ratio, so that the junction temperature calculated based on the conduction loss is more precise. In addition, according to the junction temperature calculation solution of one aspect of the disclosure, the conduction loss and the switching loss of the switching device are corrected based on the second correction coefficient and the third correction coefficient according to the alternating-current frequency, which further improves the calculation precision of the junction temperature.

**Brief Description of the Drawings**

The above and other objectives and advantages of the disclosure will be clearer and more thorough from the following detailed description in conjunction with the drawings.

FIG. 1 shows a junction temperature calculation method for an insulated gate bipolar transistor (IGBT) inverter;
FIG. 2 shows a junction temperature calculation method 2000 for a power conversion module according to an embodiment of the disclosure;

FIG. 3 is a schematic diagram of a first-order thermal resistance network model of a switching device according to an embodiment of the disclosure;

FIG. 4 is a schematic diagram of a phase voltage, a carrier voltage, and an impulse function of inverter according to an embodiment of the disclosure;

FIG. 5(a) is a schematic diagram of setting a first correction coefficient of an IGBT device based on a modulation ratio according to an embodiment of the disclosure;

FIG. 5(b) is a schematic diagram of setting a first correction coefficient of an FWD device based on a modulation ratio according to an embodiment of the disclosure;

FIG. 5(c) is a schematic diagram of setting a second correction coefficient of an IGBT device based on an alternating-current frequency according to an embodiment of the disclosure;

FIG. 5(d) is a schematic diagram of setting a second correction coefficient of an FWD device based on an alternating-current frequency according to an embodiment of the disclosure;

FIG. 5(e) is a schematic diagram of setting a third correction coefficient of an IGBT device based on an alternating-current frequency according to an embodiment of the disclosure;

FIG. 5(f) is a schematic diagram of setting a third correction coefficient of an FWD device based on an alternating-current frequency according to an embodiment of the disclosure;

FIG. 6 shows a junction temperature calculation device 6000 for a power conversion module according to an embodiment of the disclosure; and

FIG. 7 shows a junction temperature calculation device 7000 for a power conversion module according to an embodiment of the disclosure.

## Detailed Description of Embodiments

Various exemplary embodiments according to the disclosure will be described below in detail with reference to the accompanying drawings.

It should be noted that the terms such as "first" and "second" herein are intended to distinguish between similar objects, and do not necessarily describe a sequence of objects in terms of time, space, size, and the like. In addition, unless otherwise specified, the terms "including/comprising", "having", and similar expressions herein are intended to mean a non-exclusive inclusion. Furthermore, the term "vehicle" or another similar term herein include general a motor vehicle, such as a passenger vehicle (including a sport utility vehicle, a bus, a trucks, etc.), and various commercial vehicles, and include a hybrid vehicle, an electric vehicle, a plug-in hybrid electric vehicle, and the like. A hybrid vehicle is a vehicle with two or more power sources, such as a vehicle powered by a gasoline engine and an electric motor.

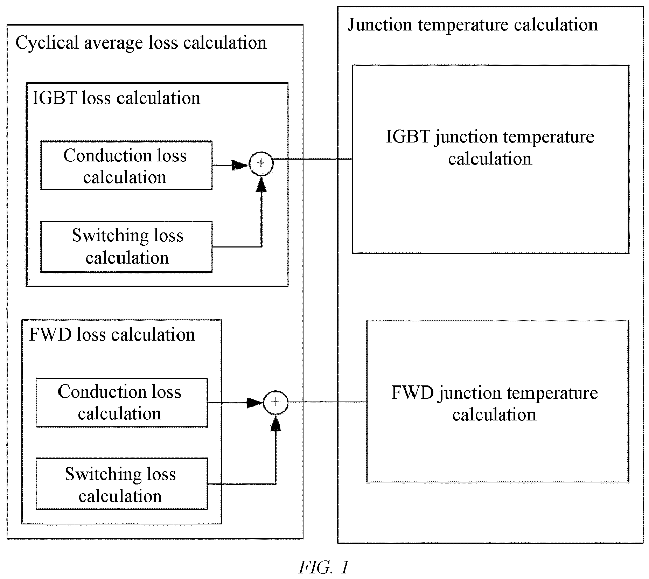

FIG. 1 shows a junction temperature calculation method for an insulated gate bipolar transistor (IGBT) inverter. An inverter includes two types of switching devices: an IGBT and a diode (FWD). As shown in FIG. 1, conduction losses and switching losses of the IGBT device and the FWD device under ideal conditions are first calculated respectively. Then, a sum of the conduction loss and the switching loss of the IGBT device is used as an ideal loss of the IGBT device, to calculate a junction temperature of the IGBT device. Similarly, a sum of the conduction loss and the switching loss of the FWD device is used as an ideal loss of the FWD device, to calculate a junction temperature of the FWD device.

It should be noted that the junction temperature calculation method shown in FIG. 1 is performed under ideal conditions. The ideal conditions may include condition (a): For an inverter with sinusoidal pulse width modulation SPWM, the SPWM control is always ideally symmetrical. However, in an actual application of a power device, in consideration of the efficiency and the bus bar voltage utilization, an SVPWM is more commonly used and over-modulation may exist to some extent. In the case of over-modulation (that is, when the modulation ratio m is greater than 1), a calculated duty cycle is larger than 100%, which is not completely consistent with the actual control. In this case, a result obtained based on the ideal junction temperature calculation method often deviates greatly from the actual case.

The ideal conditions may also include condition (b): A fundamental wave frequency of a phase voltage is such high that the conduction loss and the switching loss of the switching device are both based on an alternating current. However, in an actual application of a power device, a current flowing through the switching device is not always a high-frequency alternating current. For example, when a motor connected to the inverter rotates at a low speed (for example, when the motor is locked), the alternating-current frequency of the inverter may be very low or even gradually switches to the form of direct current. In this case, a result obtained based on the ideal junction temperature calculation method also deviates greatly from the actual case.

In view of the above problems, the disclosure provides a junction temperature calculation solution for a power conversion module.

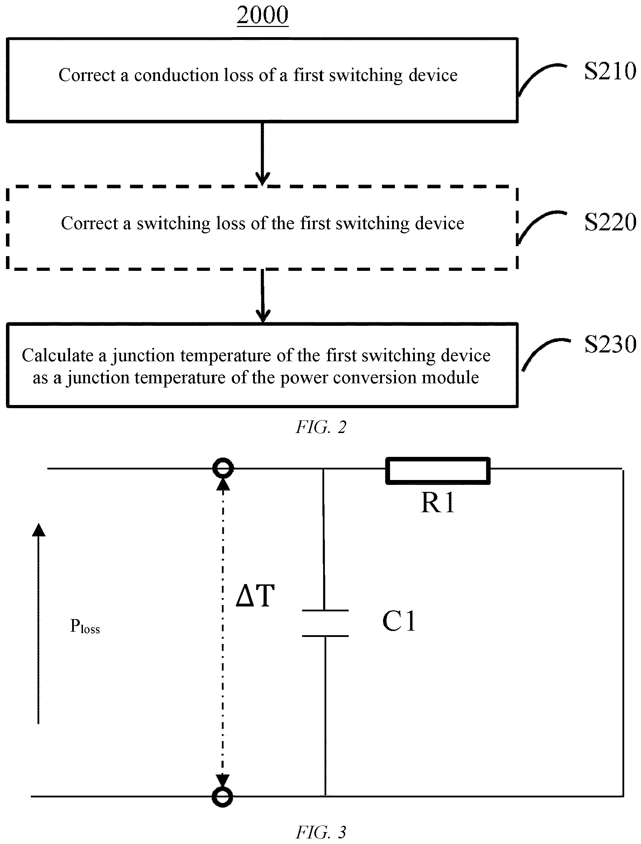

Refer to FIG. 2. FIG. 2 shows a junction temperature calculation method 2000 for a power conversion module according to an embodiment of the disclosure. The power conversion module includes a first switching device. For example, the first switching device may be an IGBT device, and the power conversion module may be an inverter including the IGBT.

It is easy to understand that, in the context of the disclosure, the term "power conversion module" is not limited to the inverter illustrated above, and is intended to mean a power and electronic device that may convert between various forms such as an alternating current and a direct current of power, power voltages, and current levels, and includes, but is not limited to, an inverter, a rectifier, a DC-DC converter, an AC-AC converter, and the like. In addition, the term "first switching device" is not limited to the IGBT device illustrated above, and may also be any power switching device such as an FWD device, an IGCT device, or an IEGT device that may be configured to turn on/off a circuit in the power conversion module.

The junction temperature calculation method 2000 for a power conversion module specifically includes the following steps.

Step 210: Correct a conduction loss of the first switching device. The correction of the conduction loss is based on a first correction coefficient $K_1$, and the first correction coefficient $K_1$ is associated with a modulation ratio of the power conversion module. Optionally, the correction for the conduction loss of the first switching device may be further based on a second correction coefficient $K_2$. The second correction coefficient $K_2$ is associated with an alternating-current frequency of the power conversion module. In an embodiment, the corrected conduction loss is a product of a first correction coefficient $K_1$ and/or a second correction coefficient $K_2$ and an ideal conduction loss.

In the context of the disclosure, the term "the conduction loss of the switching device" means an energy loss generated due to a resistive property of the switching device in a conducted state.

Step S220: Correct a switching loss of the first switching device. The correction of the switching loss is based on a third correction coefficient $K_3$, and the third correction coefficient $K_3$ is associated with the alternating-current frequency of the power conversion module. In an embodiment, the corrected switching loss is a product of the third correction coefficient $K_3$ and an ideal switching loss.

In the context of the disclosure, the term "the switching loss of the switching device" means an energy loss generated at the moment of switching on and off the switching device.

Step S230: Calculate a junction temperature of the first switching device as a junction temperature of the power conversion module. The calculation of the junction temperature of the first switching device is based on the corrected conduction loss. Optionally, the calculation of the junction temperature of the first switching device may be further based on the corrected switching loss. That is, the total power loss Pioss of the first switching device may be obtained based on the following formula, and then the junction temperature of the first switching device may be calculated based on the total power loss Pioss:

$$\mathrm{P_{loss}} = \mathrm{P_{conduction\ loss}} + \mathrm{P_{switching\ loss}} \qquad (1).$$

Therefore, in the junction temperature calculation method 2000 for a power conversion module, the conduction loss and the switching loss of the switching device are corrected according to the modulation ratio and the alternating-current frequency, and the junction temperatures of the switching device and power conversion module are calculated based on the corrected conduction loss and switching loss, so that a calculation result is more precise and closer to the actual junction temperature.

A thermal resistance network model may be used to calculate the junction temperature of the switching device. Referring to FIG. 3, a first-order thermal resistance network model is used as an example.

$$\mathrm{P_{loss}} = \mathrm{P_{loss\ C}} + \mathrm{P_{loss\ R}} \qquad (2)$$

$$\mathrm{P_{loss\ C}} = C1 \frac{\mathrm{d}(\Delta T)}{\mathrm{d}t} \qquad (3)$$

$$\mathrm{P_{loss\ R}} = \Delta T / R1 \qquad (4)$$

R1 is a thermal resistance value of the thermal resistance network model, C1 is a thermal capacitance value of the thermal resistance network model, Pioss is a total loss, Pioss c is a loss of passing through a thermal capacitance branch, $\mathrm{P_{loss\ R}}$ is a loss of passing through a thermal resistance branch, and $\Delta T$ is a temperature rise of the switching device.

The above formulas (2), (3), and (4) may be combined to obtain:

$$\frac{d(\Delta T)}{dt} + \frac{1}{R1C1} * \Delta T = \frac{P_{loss}}{C1} \qquad (5)$$

It is assumed that $d(\Delta T) = \Delta T(t) - \Delta T(t-1)$, $dt = T$, to obtain

$$\Delta T(t) = \frac{R1*C1}{T+R1*C1}\Delta T(t-1) + \frac{R1*T}{T+R1*C1} * P_{loss} \qquad (6)$$

By analogy, for the multi-order thermal resistance network model, the temperature rise of the switching device is:

$$\Delta T(t) = \Delta T1(t) + \Delta T2(t) + \cdots \qquad (7)$$

where

$$\Delta T1(t) = \frac{R1*C1}{T+R1*C1}\Delta T(t-1) + \frac{R1*T}{T+R1*C1} * P_{loss} \qquad (8);$$

and

$$\Delta T2(t) = \frac{R2*C2}{T+R2*C2}\Delta T(t-1) + \frac{R2*T}{T+R2*C2} * P_{loss} \qquad (9)$$

Temperature rises calculated in thermal resistance network models of various orders are added, and the sum is added with a substrate NTC temperature $T_{NTC}$ of the switching device, so that the junction temperature $T_j$ of the switching device may be obtained:

$$T_j = T_{NTC} + \Delta T1(t) + \Delta T2(t) + \cdots \qquad (10).$$

Thermal resistance values and thermal capacitance values of various orders in the thermal resistance network models of the switching device may be found from a data sheet or obtained through thermal testing.

Optionally, the power conversion module may further include a second switching device. Although not shown in the figure, the junction temperature calculation method 2000 may further include the following steps.

Step 240: Calculate a junction temperature of the second switching device. Similar to the first switching device, the junction temperature of the second switching device may also be calculated based on the conduction loss and the switching loss corrected according to factors such as the modulation ratio and the alternating-current frequency.

Step S250: Select the higher junction temperature from the junction temperature of the first switching device and the junction temperature of the second switching device as the junction temperature of the power conversion module.

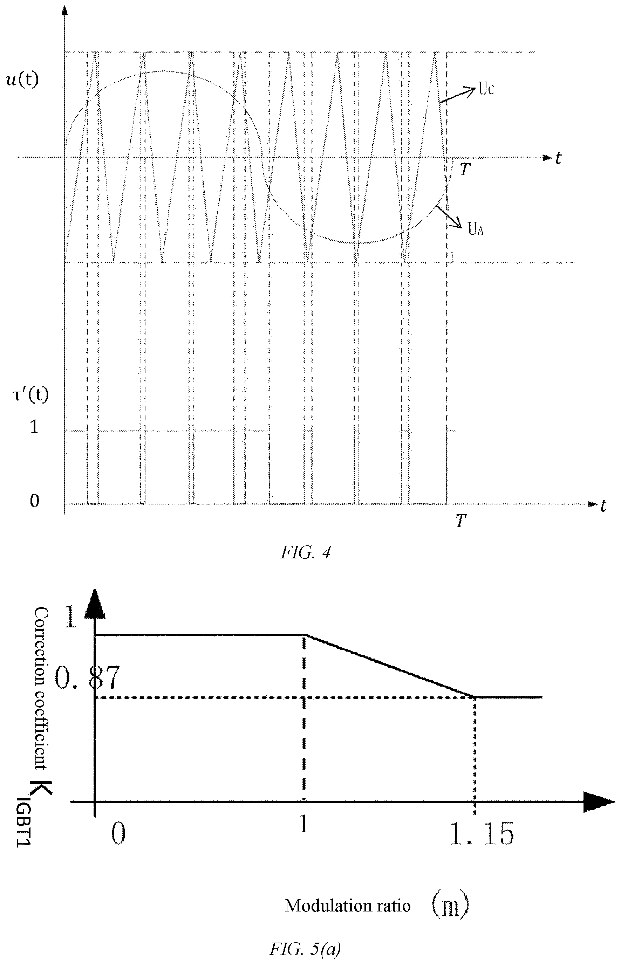

Settings of the first correction coefficient $K_1$, the second correction coefficient $K_2$, and the third correction coefficient $K_3$ are described below with reference to FIG. 4 and FIG. 5(a) to FIG. (f) by way of example.

1. Example of the first correction coefficient $K_1$

FIG. 4 is a schematic diagram of SPWM control of an inverter according to an embodiment of the disclosure. The inverter includes an IGBT device and an FWD device. Specifically, FIG. 4 uses a phase A as an example, and shows a phase voltage $U_A$ and a triangular carrier Uc on the alternating-current side of the inverter in one cycle, and an impulse function $\tau'(t)$ of the IGBT device obtained through modulation of the carrier Uc. When the IGBT is conducted, $\tau' = 1$, and when the IGBT is cut off, $\tau'(t) = 0$.

An example of calculating conduction losses of the IGBT device and the FWD device under ideal conditions is described below with reference to the embodiment shown in FIG. 4. Half bridge is used as an example. The conduction loss $P_{IGBT}$ conduction of the IGBT device and the conduction loss $P_{FWD\ conduction}$ of the FWD device in one cycle are respectively:

$$P_{\text{IGBT conduction}} = \frac{1}{T}\int_0^{T/2} u_{CE}(t) \times i(t)\,\tau'(t)dt \qquad (11);$$

and

$$P_{\text{FWD conduction}} = \frac{1}{T}\int_0^{T/2} u_F(t) \times i(t)\,[1 - \tau'(t)]dt \qquad (12).$$

T is a fundamental wave period of an output voltage $U_A$, $u_{CE}$ is a conduction voltage drop of the IGBT device, $u_F$ is a conduction voltage drop of the FWD device, i is a current flowing through the IGBT and the FWD, and $\tau'(t)$ is an impulse function.

$u_{CE}(t)$, $u_F(t)$, $i(t)$, and $\tau'(t)$ may be obtained based on the following formulas:

$$u_{CE}(t) = u_{CE0} + r_{IGBT}i(t) \qquad (13)$$

$$u_F(t) = u_{F0} + r_{FWD}i(t) \qquad (14)$$

$$i(t) = I_m \sin\omega t \qquad (15)$$

$u_{CE0}$ is an initial conduction voltage value of the IGBT device, $u_{F0}$ is an initial conduction voltage value of the FWD device, $r_{IGBT}$ is a conduction resistance of the IGBT device, $r_{FWD}$ is a conduction resistance of the FWD device, and $I_m$ is a peak current flowing through the IGBT device.

When the SPWM satisfies the condition (a), that is, sampling in SPWM control is symmetrical and regular, and the condition (b), that is, a fundamental wave frequency of the phase voltage is sufficiently high (that is, a current flowing through the switching device is always a sinusoidal alternating current), the impulse function $\tau'(t)$ may be obtained based on the following formula:

$$\tau'(t) = [1 + m\sin(\omega t + \varphi)]/2 \qquad (16)$$

$\varphi$ is a phase difference between a phase voltage fundamental wave and a phase current of the inverter, $\omega$ is an angular frequency of a phase voltage fundamental wave, and m is a modulation ratio.

The formulas (13), (14), (15), and (16) may be substituted into the formulas (11) and (12) to obtain the conduction losses of the IGBT device and the FWD device under ideal conditions.

$$P_{\text{IGBT conduction}} = I_m * \frac{u_{ce0}}{2\pi} * \left(1 + \frac{\pi}{4} * m * \cos\varphi\right) + I_m{}^2 * \frac{r_{IGBT}}{8} * \left(1 + \frac{8}{3\pi} * m * \cos\varphi\right) \qquad (17);$$

and

$$P_{\text{IFWD conduction}} = I_m * \frac{u_{F0}}{2\pi} * \left(1 - \frac{\pi}{4} * m * \cos\varphi\right) + I_m{}^2 * \frac{r_{Diode}}{8} * \left(1 - \frac{8}{3\pi} * m * \cos\varphi\right) \qquad (18).$$

In consideration of formulas (17) and (18), as shown above, in an actual application, the ideal condition (a) is not always satisfied, that is, ideally symmetrical SPWM is not always used in control of a power device. The SVPWM strategy with over-modulation is used in most scenarios, that is, the modulation ratio m may be greater than 1. In this case, if the calculation formula (16) of the impulse function under the ideal condition is still used, a maximum value of $\tau'(t)$ is greater than 1, which obviously does not meet an actual working condition. In an actual application, $\tau'(t)$ of the switching device may be only a value between 0 and 1. That is, when over-modulation exists, the conduction loss of the IGBT device calculated based on the ideal loss is higher than the actual value. Correspondingly, the conduction loss of the FWD device calculated based on the ideal loss is lower than the actual value.

Based on the above finding of the impact of the modulation ratio on the ideal conduction loss, the first correction coefficient $K_1$ of the switching device may be set as follows.

In an embodiment, for an IGBT device, the first correction coefficient $K_{IGBT1}$ may be set as: when the modulation ratio m exceeds 1, the first correction coefficient $K_{IGBT1}$ is less than 1; otherwise, the first correction coefficient $K_{IGBT1}$ is 1.

Correspondingly, for an FWD device, the first correction coefficient $K_{FWD1}$ may be set as: when the modulation ratio m exceeds 1, the first correction coefficient $K_{FWD1}$ is greater than 1; otherwise, the first correction coefficient $K_{FWD1}$ is 1. That is, the ideal conduction loss is corrected when over-modulation exists, so that the ideal conduction loss of the IGBT device is reduced through the correction to better match the actual conduction loss. Correspondingly, the ideal conduction loss of the FWD device is increased through correction to better match the actual conduction loss.

In another embodiment, for an IGBT device, the first correction coefficient $K_{IGBT1}$ may be set with reference to FIG. 5(a) as follows: when the modulation ratio m does not exceed 1, the first correction coefficient $K_{IGBT1}$ is set to 1; when the modulation ratio m is a maximum value $m_{max}$, the first correction coefficient $K_{IGBT1}$ is set to $1/m_{max}$; and when the modulation ratio m is between 1 and $m_{max}$, the first correction coefficient $K_{IGBT1}$ is set to a linear interpolation between 1 and $1/m_{max}$.

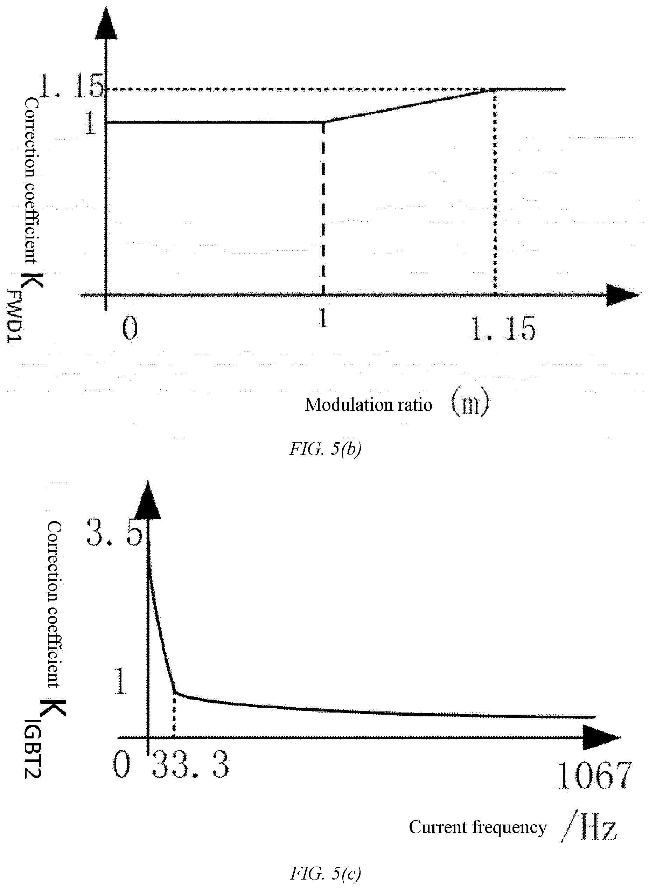

Correspondingly, for an FWD device, the first correction coefficient $K_{FWD1}$ may be set with reference to FIG. 5(b) as follows: when the modulation ratio m does not exceed 1, the first correction coefficient $K_{FWD1}$ is set to 1; when the modulation ratio m is a maximum value $m_{max}$, the first correction coefficient $K_{FWD1}$ is set to $m_{max}$; and when the modulation ratio m is between 1 and $m_{max}$, the first correction coefficient $K_{FWD1}$ is set to a linear interpolation between 1 and $m_{max}$. In the embodiments shown in FIG. 5(a) and FIG. 5(b), $m_{max} = 1.15$.

2. Example of the second correction coefficient $K_2$

Back to the formulas (17) and (18), as shown above, in an actual application, the ideal condition (b) is not always satisfied, that is, a phase voltage frequency is not always sufficiently high. For example, when a motor connected to the power conversion module is locked, that is, when a rotation speed of the motor is zero, frequencies of the phase voltage and the phase current are both zero, that is, both are direct currents.

For example, a current flowing through the IGBT device and the FWD device is a direct current. Formula (15) is obviously no longer applicable, and the current flowing through the IGBT device and the FWD device is approximately:

$$i(t) = I_m \qquad\qquad (19)$$

Besides, the modulation ratio m becomes very small and may be approximately 0. According to the formula (16), the duty cycle of the IGBT device may be approximately 50%. The formulas (13) and (19) may be substituted into the formula (11) and the formulas (14) and (19) may be substituted into the formula (12), to obtain the actual conduction loss when the current flowing through the switching device is a direct current:

$$P'_{IGBT\ conduction} = i(t) * u_{ce}(t) * 50\% = I_m * \frac{u_{ce0}}{2} + I_m^2 * \frac{r_{IGBT}}{2} \qquad (20);$$

and

$$P'_{FWD\ conduction} = i(t) * u_F(t) * 50\% = I_m * \frac{u_{F0}}{2} + I_m^2 * \frac{r_{Diode}}{2} \qquad (21).$$

As can be seen by comparing the formula (17) with the formula (20) and the formula (18) with the formula (21), when the frequency of the current flowing through the switching device is very low (close to zero), the ideal conduction loss deviates from the actual value. Specifically, ideal conduction losses of the IGBT device and the FWD device are both lower than the actual value.

Based on the above finding of the impact of the current frequency on the ideal conduction loss, the second correction coefficient $K_2$ of the switching device may be set as follows.

In an embodiment, for an IGBT device and an FWD device, the second correction coefficient $K_2$ may be set as follows: in a case that the alternating-current frequency f is less than a first frequency threshold, the second correction coefficient $K_2$ is greater than 1; otherwise, the second correction coefficient $K_2$ is 1. That is, when the current frequency is excessively low, the ideal conduction loss is corrected, so that the ideal conduction losses of the IGBT device and the FWD device are increased through correction to better match the actual conduction loss.

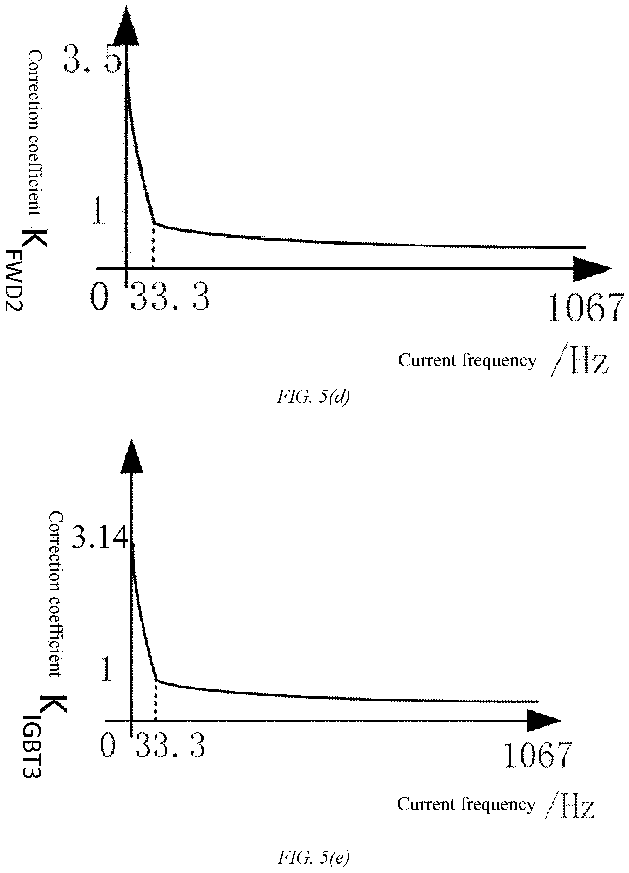

In another embodiment, the second correction coefficients $K_{IGBT2}$ and $K_{FWD2}$ may be set with reference to FIG. 5(c) and FIG. 5 (d) as follows: when the alternating-current frequency is 0, the second correction coefficients $K_{IGBT2}$ and $K_{FWD2}$ are set to maximum values, that is, $K_{IGBT2(max)}$ and $K_{FWD2(max)}$; when the alternating-current frequency is a first frequency threshold, the second correction coefficients $K_{IGBT2}$ and $K_{FWD2}$ are set to 1; when the alternating-current frequency is between 0 and the first frequency threshold, the second correction coefficient $K_{IGBT2}$ is set to a linear interpolation between $K_{IGBT2(max)}$ and 1 and $K_{FWD2}$ is set to a linear interpolation between $K_{FWD2(max)}$ and 1; and when the alternating-current frequency is greater than the first frequency threshold, the second correction coefficients $K_{IGBT2}$ and $K_{FWD2}$ are set to be close to 1.

In the context of the disclosure, the term "first frequency threshold" is intended to mean a preset frequency and may be obtained through various methods such as empirical values and test values. In the embodiments shown in FIG. 5(c) and FIG. 5 (d), the second frequency threshold may be 33.3 Hz. However, the disclosure is not limited thereto, and the first frequency threshold may be preset to any suitable frequency that may indicate that the alternating-current frequency is not sufficiently high so that the ideal conduction loss deviates.

In the context of the disclosure, the maximum values $K_{IGBT2(max)}$ and $K_{FWD2(max)}$ of $K_{IGBT2}$ and $K_{FWD2}$ are preset and may be provided by any suitable means such as look-up tables and experiments. For example, as can be seen by comparing the formula (17) with the formula (20), the first part of the actual value of the conduction loss is about 3.14 times the ideal value, and the second part of the actual value of the conduction loss is about 4 times the ideal value. Therefore, $K_{IGBT2(max)}$ and $K_{FWD2(max)}$ may be set to certain suitable values between 3.14 and 4 respectively, for example, 3.5 as shown in FIG. 5(c) and FIG. 5(d).

3. Example of the third correction coefficient $K_3$

An example of calculating switching losses of the IGBT device and the FWD device under ideal conditions is described below with reference to the embodiment shown in FIG. 4.

Half bridge is still used as an example. The switching loss $P_{IGBT\ switching}$ of the IGBT device and the switching loss $P_{FWD\ switching}$ of the FWD device are respectively:

$$P_{IGBT\ switching} = f_{PWM} \frac{1}{T} \int_0^{T/2} [E_{on}(i(t), U) + E_{off}(i(t), U)] dt \qquad (22);$$

and

$$P_{FWD\ switching} = f_{PWM} \frac{1}{T} \int_0^{T/2} [E_{rec}(i(t), U)] dt \qquad (23).$$

$E_{on}$ is turn-on power loss of the IGBT and is approximately linearly related to the current. $E_{off}$ is turn-off power loss of the IGBT and is approximately linearly related to the current. $E_{rec}$ is rectification power loss of the FWD and is approximately linearly related to the current. $f_{PWM}$ is a switching frequency.

Therefore, an expression of a sum of the turn-on power losses and the turn-off power losses of the IGBT device and the FWD device in one switching cycle is:

$$E_{IGBT\ switching}(I, U_{CE}) = [E_{on}(I_n, U_n) + E_{off}(I_n, U_n)] \frac{i}{I_n} \frac{U_{CE}}{U_n} \qquad (24);$$

and

$$E_{FWD\ switching}(I, U_{CE}) = [E_{rec}(I_n, U_n)] \frac{i}{I_n} \frac{U_{CE}}{U_n} \qquad (25)$$

$U_n$ is a given test voltage value (which, for example, may be determined by querying a data sheet), $I_n$ is a test current value given in a data sheet, $E_{on}(I_n, U_n)$ is energy consumed by each turn-on pulse when the IGBT device is under the condition of $U_n$ and $I_n$, $E_{off}(I_n, U_n)$ is energy consumed by each turn-off pulse when the IGBT device is under the condition of $U_n$ and $I_n$, $E_{rec}(I_n, U_n)$ is energy consumed in each rectification when the FWD device is under the condition of $U_n$ and $I_n$, i is a current value flowing through the IGBT device and the FWD device, and $U_{CE}$ is an actual voltage value (that is, a bus bar voltage value) between a collector and an emitter of the IGBT device.

The formulas (16) and (24) may be substituted into the formula (22) to obtain the switching loss of the IGBT device under ideal conditions, and the formulas (16) and (25) may be substituted into the formula (23) to obtain the switching loss of the FWD device under ideal conditions:

$$P_{\text{IGBT switching}} = \frac{f_{\text{PWM}}}{\pi} \left[ E_{\text{on}}(I_n, U_n) + E_{\text{off}}(I_n, U_n) \right] \frac{I_m}{I_n} \frac{U_{\text{CE}}}{U_n} \qquad (26);$$

and

$$P_{\text{FWD switching}} = \frac{f_{\text{PWM}}}{\pi} \left[ E_{\text{rec}}(I_n, U_n) \right] \frac{I_m}{I_n} \frac{U_{\text{CE}}}{U_n} \qquad (27).$$

The formulas (15) and (16) under ideal conditions are used in the calculation of the switching losses of the IGBT device and the FWD device.

However, as shown above, in an actual application, the ideal condition (b) is not always satisfied. For example, the current flowing through the IGBT device and the FWD device is a direct current. The formulas (19) and (24) may be substituted into the formula (22) and the formulas (19) and (25) may be substituted into the formula (23), to obtain the actual switching loss when the current flowing through the switching device is a direct current:

$$P'_{\text{IGBT switching}} = f_{\text{PWM}} * \left[ E_{\text{on}}(I_n, U_n) + E_{\text{off}}(I_n, U_n) \right] \frac{I_m}{I_n} \frac{U_{\text{CE}}}{U_n} \qquad (28);$$

and

$$P'_{\text{FWD switching}} = f_{\text{PWM}} * \left[ E_{\text{rec}}(I_n, U_n) \right] \frac{I_m}{I_n} \frac{U_{\text{CE}}}{U_n} \qquad (29).$$

As can be seen by comparing the formula (26) with the formula (28) and the formula (27) with the formula (29), when the frequency of the current flowing through the switching device is very low (close to zero), the ideal switching loss deviates from the actual value. Specifically, ideal switching losses of the IGBT device and the FWD device are both lower than the actual value.

Based on the above finding of the impact of the modulation ratio on the ideal switching loss, the third correction coefficient $K_3$ of the switching device may be set as follows.

In an embodiment, for an IGBT device, the third correction coefficient $K_{\text{IGBT3}}$ may be set as follows: when the alternating-current frequency is less than a preset second frequency threshold, the third correction coefficient $K_{\text{IGBT3}}$ is greater than 1; otherwise, the third correction coefficient $K_{\text{IGBT3}}$ is 1. That is, when the current frequency is excessively low, the ideal switching loss is corrected, so that the ideal switching losses of the IGBT device and the FWD device are increased through correction to better match the actual switching loss.

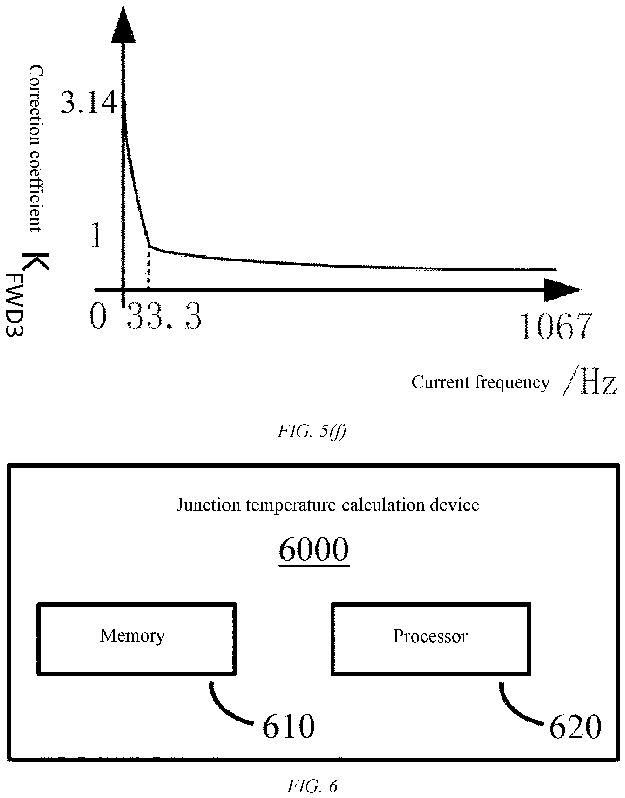

In another embodiment, the third correction coefficients $K_{\text{IGBT3}}$ and $K_{\text{FWD3}}$ may be set with reference to FIG. 5(e) and FIG. 5 (f) as follows: when the alternating-current frequency is 0, the third correction coefficients $K_{\text{IGBT3}}$ and $K_{\text{FWD3}}$ are set to maximum values, that is, $K_{\text{IGBT3(max)}}$ and $K_{\text{FWD3(max)}}$; when the alternating-current frequency is a second frequency threshold, the third correction coefficients $K_{\text{IGBT3}}$ and $K_{\text{FWD3}}$ are set to 1; when the alternating-current frequency is between 0 and the second frequency threshold, the third correction coefficient $K_{\text{IGBT3}}$ is set to a linear interpolation between $K_{\text{IGBT3(max)}}$ and 1 and $K_{\text{FWD3}}$ is set to a linear interpolation between $K_{\text{FWD3(max)}}$ and 1; and when the alternating-current frequency is greater than the second frequency threshold, the third correction coefficients $K_{\text{IGBT3}}$ and $K_{\text{FWD3}}$ are set to be close to 1.

In the context of the disclosure, the term "second frequency threshold" is intended to mean a preset frequency and may be obtained through various methods such as empirical values and test values. In the embodiments shown in FIG. 5(e) and FIG. 5 (f), the second frequency threshold may be 33.3 Hz. However, the disclosure is not limited thereto, and the second frequency threshold may be preset to any suitable frequency that may indicate that the alternating-current frequency is not sufficiently high so that the ideal conduction loss deviates.

In the context of the disclosure, the maximum values $K_{\text{IGBT3(max)}}$ and $K_{\text{FWD3(max)}}$ of $K_{\text{IGBT3}}$ and $K_{\text{FWD3}}$ are preset and may be provided by any suitable means such as look-up tables and experiments. For example, as can be seen from the formula (26) and the formula (28), the actual value of the switching loss of the IGBT device is about 3.14 times the ideal value. As can be seen from the formula (27) and the formula (29), the actual value of the switching loss of the FWD device is about 3.14 times the ideal value. Therefore, $K_{IGBT3(max)}$ and $K_{FWD3(max)}$ may be both set to 3.14, for example, as shown in FIG. 5(e) and FIG. 5(f).

Some examples of setting the first correction coefficient $K_1$, the second correction coefficient $K_2$, and the third correction coefficient $K_3$ are provided above.

In addition, in consideration that there are errors between theoretical parameters and actual parameters and the nonlinearity impact of the alternating-current frequency on the correction coefficient $K_2$ of the conduction loss, there may be an error between the calculated junction temperature and the actual junction temperature. Therefore, after the hardware design solution is determined, the real junction temperature of the power conversion module may be collected by a thermal imager on a test bench, so that the first correction coefficient $K_1$, the second correction coefficient $K_2$, and the third correction coefficient $K_3$ are re-corrected.

In an embodiment, for an inverter whose output current is used to drive the motor, the first correction coefficient $K_1$ is corrected as follows. Specifically, a water temperature of a coolant inlet on the test bench is kept at 65 degrees Celsius, a flow rate is 8 L/min, a switching frequency of a motor controller is 10 kHz, and a direct-current bus bar voltage is always 300 V. Peak positive current and peak negative current outputs are tested when test rotation speeds are 2000 rpm, 3000 rpm, 4000 rpm, 4200 rpm, 4400 rpm, 4600 rpm, and 4800 rpm. The peak currents of all tests are the same. A modulation ratio of each test point and a measured junction temperature of the IGBT device are recorded. A junction temperature of the IGBT device at 2000 rpm is used as a reference value 1, and actual junction temperatures of other test points are divided by the junction temperature at 2000 rpm to obtain the first correction coefficient $K_1$. For the FWD device, the first correction coefficient $K_1$ may be corrected in a similar manner.

In an embodiment, for an inverter whose output current is used to drive the motor, the second correction coefficient $K_2$ and the third correction coefficient $K_3$ are corrected as follows. Specifically, a water temperature of a coolant inlet on the test bench is kept at 65 degrees Celsius and a flow rate is 8 L/min. The motor rotor is locked on the bench, and a phase with a poor cooling condition, such as a phase w may be selected as a rotor locking angle. In this case, a locking current of each phase $|Iw| = |Iu| + |Iv|$, and $Iu = Iv$. It is set that the third correction coefficient $K_3$ is the default value 3.14 at 0 rpm, a locking torque is tested when a switching frequency of the motor controller is 10 kHz, and the second correction coefficient $K_2$ at 0 rpm is updated according to the measured junction temperature.

Then, values of junction temperatures calculated based on the second correction coefficient $K_2$ and the third correction coefficient $K_3$ are verified for locking at switching frequencies of 8 kHz, 6 kHz, and 4 kHz. If the measured junction temperatures are higher than the calculated values at 8 kHz, 6 kHz, and 4 kHz, the third correction coefficient $K_3$ is appropriately reduced. If the measured junction temperatures are lower than the calculated values at 8 kHz, 6 kHz, and 4 kHz, the third correction coefficient $K_3$ is appropriately increased. The above steps are repeated until rotation speed correction at 0 rpm is completed. Due to the nonlinearity impact of the rotational speed coefficient, more rotational speed points may be selected between 0 and the first frequency threshold and the second frequency threshold to perform the above correction of the second correction coefficient $K_2$ and the third correction coefficient $K_3$.

The correction coefficients are corrected through experiments, so that these correction coefficients are closer to the actual case, and the conduction loss and the switching loss obtained based on correction of the correction coefficients are closer to the actual case. Finally, a calculation result of the junction temperature is more precise and suitable for online junction temperature calculation and temperature monitoring of the power conversion module.

FIG. 6 is a block diagram of a junction temperature calculation device 6000 according to an embodiment of the disclosure. The junction temperature calculation device 6000 includes a memory 610 and a processor 620. Although not shown in FIG. 6, the junction temperature calculation device 6000 further includes a computer program stored on the memory 610 and executable on the processor 620, thereby implementing various steps in the junction temperature calculation method in the foregoing embodiments.

The memory 610 may be a random access memory (RAM), a read-only memory (ROM), an electrically programmable read-only memory (EPROM), an electrically erasable programmable read-only memory (EEPROM) or an optical disk storage device, a magnetic disk storage device, or any another medium capable of carrying or storing desired program code in the form of machine-executable instructions or data structures and capable of being accessed by the processor 620. The processor 620 may be any suitable dedicated or general-purpose processor such as a field-programmable gate array (FPGA), an application-specific integrated circuit (ASIC), or a digital signal processor (DSP).

In an application scenario of a vehicle, the power conversion device may be, for example, an inverter for converting direct-current power on the battery side of the vehicle into alternating-current power for usage by the vehicle. The junction temperature calculation device 6000 may be an independent device for junction temperature calculation, or may be combined in another processing device such as an electronic control unit (ECU) or a domain control unit (DCU).

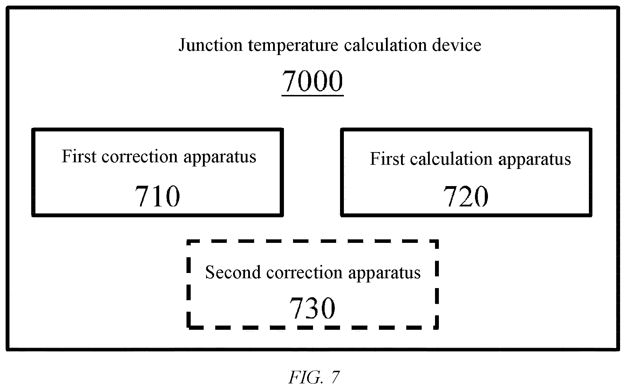

FIG. 7 is a block diagram of a junction temperature calculation device 7000 for a power conversion module according to an embodiment of the disclosure. The power conversion module includes a first switching device, and the junction temperature calculation device 7000 includes a first correction apparatus 710 and a first calculation apparatus 720.

The first correction apparatus 710 is configured to correct a conduction loss of the first switching device. The correction of the conduction loss is based on at least a first correction coefficient $K_1$. Optionally, the correction of the conduction loss may be further based on a second correction coefficient $K_2$.

The first calculation apparatus 720 is configured to calculate a junction temperature of the first switching device as a junction temperature of the power conversion module, where the calculation of the junction temperature of the first switching device is based on at least the corrected conduction loss.

As described above, the first correction coefficient $K_1$ is associated with the modulation ratio of the power conversion module, and the second correction coefficient $K_2$ is associated with an alternating-current frequency of the power conversion module.

The junction temperature calculation device 7000 may further include a second correction apparatus 730. The second correction apparatus 730 is configured to correct a switching loss of the first switching device. The correction of the switching loss is based on at least a third correction coefficient $K_3$. The third correction coefficient $K_3$ is associated with the alternating-current frequency of the power conversion module. The calculation of the junction temperature of the first switching device in the first calculation apparatus 710 is further based on at least the switching loss corrected by the second correction apparatus 730.

The first correction coefficient $K_1$, the second correction coefficient $K_2$, and the third correction coefficient $K_3$ may be set in the manner described above, and details are not described herein again.

In addition to the first switching device (for example, an IGBT device), the power conversion module may further include a second switching device (for example, an FWD device). Accordingly, the junction temperature calculation device 7000 may further include a second calculation device 640 (not shown in FIG. 7). The second calculation apparatus 640 is configured to calculate a junction temperature of the second switching device. The switching loss and the conduction loss of the second switching device used in the second calculation apparatus 640 may also be corrected according to factors such as a modulation ratio and an alternating-current frequency. A specific correction method is similar to that of the first switching device, and details are not described herein again.

The junction temperature calculation device 7000 may further include a selection apparatus 650 (not shown in FIG. 7). The selection apparatus 650 is configured to select the higher junction temperature from the junction temperature of the first switching device that is calculated by the first calculation apparatus and the junction temperature of the second switching device that is calculated by the second calculation apparatus as the junction temperature of the power conversion module.

It should be understood that, some of the block diagrams shown in the accompanying drawings of the disclosure are functional entities and do not necessarily correspond to physically or logically independent entities. These functional entities may be implemented in the form of software, in one or more hardware modules or integrated circuits, or in different networks and/or processor apparatuses and/or micro-controller apparatuses.

It should also be understood that, in some alternative embodiments, the functions/steps included in the foregoing methods may not occur in the order shown in the flowchart. For example, two functions/steps shown in sequence may be executed substantially simultaneously or even in a reverse order. This specifically depends on the functions/steps involved.

In addition, those skilled in the art readily understand that the junction temperature calculation method provided in the one or more embodiments of the disclosure can be implemented by using a computer program. For example, when a computer storage medium (for example, a USB flash drive) storing the computer program is connected to a computer, the junction temperature calculation method in one or more embodiments of the disclosure can be performed by running the computer program.

In conclusion, according to the junction temperature calculation solution of one aspect of the disclosure, the conduction loss of the switching device is corrected based on the first correction coefficient according to the modulation ratio, so that the junction temperature calculated based on the conduction loss is more precise, and the junction temperature of the power conversion module may be estimated online more accurately. In addition, according to the junction temperature calculation solution of one aspect of the disclosure, the conduction loss and the switching loss of the switching device are corrected based on the second correction coefficient and the third correction coefficient according to the alternating-current frequency, which further improves the calculation precision of the junction temperature.

In addition, according to the junction temperature calculation solution according to one aspect of the disclosure, the solution of setting each correction coefficient is provided based on theoretical analysis, so that the conduction loss and the switching loss obtained through the correction of these coefficients are closer to the actual loss. In addition, according to the junction temperature calculation solution of an aspect of the disclosure, each correction coefficient is corrected through experiments, so as to further improve the precision of these correction coefficients, thereby improving the precision of the final junction temperature calculation result.

Although only some implementations of the disclosure are described above, a person of ordinary skill in the art should understand that the disclosure may be implemented in multiple other forms without departing from the essence and scope of the disclosure. Accordingly, the presented examples and implementations are considered to be illustrative rather than restrictive, and the disclosure may encompass various modifications and replacements without departing from the spirit and scope of the disclosure that are defined by the appended claims.

**Claims**

1. A junction temperature calculation method for a power conversion module, wherein the power conversion module comprises a first switching device; and the junction temperature calculation method comprises:

   correcting a conduction loss of the first switching device, wherein the correction of the conduction loss is based on at least a first correction coefficient $K_1$, and the first correction coefficient $K_1$ is associated with a modulation ratio of the power conversion module; and
   calculating a junction temperature of the first switching device as a junction temperature of the power conversion module, wherein the calculation of the junction temperature of the first switching device is based on at least the corrected conduction loss.

2. The junction temperature calculation method according to claim 1, wherein

   in a case that the modulation ratio exceeds 1, the first correction coefficient $K_1$ is less than 1; otherwise, the first correction coefficient $K_1$ is 1; and/or
   the power conversion module further comprises a second switching device, and the junction temperature calculation method further comprises:

   calculating a junction temperature of the second switching device; and
   selecting the higher junction temperature from the junction temperature of the first switching device and the junction temperature of the second switching device as the junction temperature of the power conversion module.

3. The junction temperature calculation method according to claim 1 or 2, wherein
   the correction of the conduction loss is further based on at least a second correction coefficient $K_2$, and the second correction coefficient $K_2$ is associated with an alternating-current frequency of the power conversion module.

4. The junction temperature calculation method according to claim 3, wherein

   in a case that the alternating-current frequency is less than a first frequency threshold, the second correction coefficient $K_2$ is greater than 1; otherwise, the second correction coefficient $K_2$ is 1; and/or
   the junction temperature calculation method further comprises:

   correcting a switching loss of the first switching device;
   wherein the correction of the switching loss is based on at least a third correction coefficient $K_3$, and the third correction coefficient $K_3$ is associated with the alternating-current frequency of the power conversion module;
   the calculation of the junction temperature of the first switching device is further based on at least the corrected switching loss;
   preferably, in a case that the alternating-current frequency is less than a second frequency threshold, the third correction coefficient $K_3$ is greater than 1; otherwise, the third correction coefficient $K_3$ is 1; and

   preferably, at least one of the following coefficients is experimentally corrected:
   the first correction coefficient $K_1$, the second correction coefficient $K_2$, and the third correction coefficient $K_3$.

5. A junction temperature calculation device for a power conversion module, wherein the power conversion module comprises a first switching device; and the junction temperature calculation device comprises:
   a first correction apparatus configured to correct a conduction loss of the first switching device, wherein the correction of the conduction loss is based on at least a first correction coefficient $K_1$, and the first correction coefficient $K_1$ is associated with a modulation ratio of the power conversion module; and a first calculation apparatus configured to calculate a junction temperature of the first switching device as a junction temperature of the power conversion module, wherein the calculation of the junction temperature of the first switching device is based on at least the corrected conduction loss.

6. The junction temperature calculation device according to claim 5, wherein

in a case that the modulation ratio exceeds 1, the first correction coefficient $K_1$ is less than 1; otherwise, the first correction coefficient $K_1$ is 1; and/or
the power conversion module further comprises a second switching device, and the junction temperature calculation device further comprises:

a second calculation apparatus configured to calculate a junction temperature of the second switching device; and
a selection apparatus configured to select the higher junction temperature from the junction temperature of the first switching device that is calculated by the first calculation apparatus and the junction temperature of the second switching device that is calculated by the second calculation apparatus as the junction temperature of the power conversion module.

7. The junction temperature calculation device according to claim 5 or 6, wherein

the correction of the conduction loss in the first correction apparatus is further based on at least a second correction coefficient $K_2$, and the second correction coefficient $K_2$ is associated with an alternating-current frequency of the power conversion module;
preferably, in a case that the alternating-current frequency is less than a first frequency threshold, the second correction coefficient $K_2$ is greater than 1; otherwise, the second correction coefficient $K_2$ is 1; and/or
preferably, the junction temperature calculation device further comprises:

a second correction apparatus configured to correct a switching loss of the first switching device;
wherein the correction of the switching loss is based on at least a third correction coefficient $K_3$, and the third correction coefficient $K_3$ is associated with the alternating-current frequency of the power conversion module;
the calculation of the junction temperature of the first switching device in the first calculation apparatus is further based on at least the corrected switching loss;
preferably, in a case that the alternating-current frequency is less than a second frequency threshold, the third correction coefficient $K_3$ is greater than 1; otherwise, the third correction coefficient $K_3$ is 1; and

preferably, at least one of the following coefficients is experimentally corrected:
the first correction coefficient $K_1$, the second correction coefficient $K_2$, and the third correction coefficient $K_3$.

8. A junction temperature calculation device, comprising a memory, a processor, and a computer program stored on the memory and executable on the processor, wherein when the computer program is executed by the processor, the junction temperature calculation method according to any one of claims 1 to 4 is implemented.

9. A vehicle, comprising the junction temperature calculation device according to any one of claims 5 to 7.

10. A computer-readable storage medium having a computer program stored thereon, wherein when the computer program is executed by a processor, the junction temperature calculation method according to any one of claims 1 to 4 is implemented.

FIG. 1

## 2000

| Correct a conduction loss of a first switching device | S210 |

| Correct a switching loss of the first switching device | S220 |

| Calculate a junction temperature of the first switching device as a junction temperature of the power conversion module | S230 |

*FIG. 2*

R1

$\Delta T$

C1

$P_{loss}$

*FIG. 3*

*FIG. 4*

Modulation ratio $(m)$

*FIG. 5(a)*

FIG. 5(b)

FIG. 5(c)

*FIG. 5(d)*

*FIG. 5(e)*

*FIG. 5(f)*

*FIG. 6*

Junction temperature calculation device

7000

First correction apparatus

710

First calculation apparatus

720

Second correction apparatus

730

FIG. 7

Europäisches
Patentamt

European
Patent Office

Office européen
des brevets

## EUROPEAN SEARCH REPORT

**Application Number**

EP 22 20 5467

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MASOUD FARHADI ET AL: "Failure analysis and reliability evaluation of modulation techniques for neutral point clamped inverters-A usage model approach", ARXIV.ORG, CORNELL UNIVERSITY LIBRARY, 201 OLIN LIBRARY CORNELL UNIVERSITY ITHACA, NY 14853, 8 October 2019 (2019-10-08), XP081512343, DOI: 10.1016/J.ENGFAILANAL.2016.06.010 * pages 11-16; figures 4, 5 * | 1-10 | INV. H02M1/32 H02P29/68 |
| X | SATHIK MOHAMED HALICK MOHAMED ET AL: "Online junction temperature estimation of IGBT modules for Space Vector Modulation based inverter system", 2016 INTERNATIONAL SYMPOSIUM ON POWER ELECTRONICS, ELECTRICAL DRIVES, AUTOMATION AND MOTION (SPEEDAM), IEEE, 22 June 2016 (2016-06-22), pages 156-162, XP032932328, DOI: 10.1109/SPEEDAM.2016.7525975 [retrieved on 2016-07-28] * the whole document * | 1-10 | |
| A | WANG SHANBIN ET AL: "Loss analysis of IGBT in three-phase rectifier based on five-segment SVPWM", 2017 32ND YOUTH ACADEMIC ANNUAL CONFERENCE OF CHINESE ASSOCIATION OF AUTOMATION (YAC), IEEE, 19 May 2017 (2017-05-19), pages 160-165, XP033111126, DOI: 10.1109/YAC.2017.7967397 [retrieved on 2017-06-30] * the whole document * | 1-10 | TECHNICAL FIELDS SEARCHED (IPC) H02M H02P |

-/--

The present search report has been drawn up for all claims

| Place of search | Date of completion of the search | Examiner |
|---|---|---|
| The Hague | 1 March 2023 | van Wesenbeeck, R |

EPO FORM 1503 03.82 (P04C01)

Europäisches
Patentamt

European
Patent Office

Office européen
des brevets

**EUROPEAN SEARCH REPORT**

Application Number

EP 22 20 5467

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PERRUCHOUD P J P ET AL: "Power losses for space vector modulation techniques", POWER ELECTRONICS IN TRANSPORTATION, 1996., IEEE DEARBORN, MI, USA 24-25 OCT. 1996, NEW YORK, NY, USA,IEEE, US, 24 October 1996 (1996-10-24), pages 167-173, XP010207853, DOI: 10.1109/PET.1996.565925 ISBN: 978-0-7803-3292-8 * the whole document * | 1-10 | |

TECHNICAL FIELDS SEARCHED (IPC)

The present search report has been drawn up for all claims

| Place of search | Date of completion of the search | Examiner |
|---|---|---|
| The Hague | 1 March 2023 | van Wesenbeeck, R |

EPO FORM 1503 03.82 (P04C01)